# EUROPEAN PATENT SPECIFICATION

(11) **EP 4 267 712 B1**
(45) Date of publication and mention of the grant of the patent: **26.11.2025**
(21) Application number: 21844817.3
(22) Date of filing: 22.12.2021
(51) Int. Cl.: B65D 6/02, C12G 3/07, C12H 1/22, C12J 1/08, B65D 6/34

(54) **DEVICE FOR THE REFINEMENT OF ALCOHOLIC BEVERAGES AND METHOD FOR THE REFINEMENT OF ALCOHOLIC BEVERAGES BY USING SUCH A DEVICE**
VORRICHTUNG ZUR VERFEINERUNG ALKOHOLISCHER GETRÄNKE UND VERFAHREN ZUR VERFEINERUNG ALKOHOLISCHER GETRÄNKE UNTER VERWENDUNG SOLCH EINER VORRICHTUNG
DISPOSITIF DE RAFFINAGE DE BOISSONS ALCOOLISÉES ET PROCÉDÉ DE RAFFINAGE DE BOISSONS ALCOOLISÉES À L'AIDE D'UN TEL DISPOSITIF

(30) Priority: 28.12.2020 IT 202000032540
(43) Date of publication of application: 01.11.2023
(73) Proprietor: OMNIA TECHNOLOGIES S.P.A., 31040 Trevignano (TV) (IT)
(72) Inventor: DELLA TOFFOLA, Francesco, 31040 Trevignano (TV) (IT); AMAMI, Yacine, Tunisi, 2092 (TN)
(74) Representative: Dragotti & Associati S.P.A.
(86) International application number: PCT/IB2021/062158
(87) International publication number: WO 2022/144698

(56) References cited:
- EP-B1- 2 956 374
- WO-A2-2009/090532
- FR-A1- 2 798 936
- GB-A- 1 156 288
- US-A- 2 657 629
- US-A1- 2012 088 018

## Description

The present invention relates to a device for refinement of alcoholic beverages, such as red and white wines, liqueurs, distilled beverages, beers.

The present invention relates, moreover, to a method for the refinement of alcoholic beverages by using such a device.

It is known that, at the end of the fermentation step, alcoholic beverages are subjected to a refinement step carried out inside special containers. This step consists in a more or less long period of maturation/ageing which allows the beverages to improve their organoleptic properties. US 2 657 629 A relates to a device for ageing whiskey, comprising a container having an opening in the upper portion thereof and containing at least one wall, a perforated sleeve-like member of inert material disposed within said container so as to provide a space between it and the wall of the container in communication with the interior of said container, and white oak members disposed within said space adapted to be in free contact with whiskey which is placed therein.

Refinement is preferably performed inside wooden barrels since the prolonged contact between the wood of the barrel and the beverage contained inside it allows the beverage to be enriched with substances released from the wood, such as tannins, vanillin and cinnamic aldehydes.

Moreover, during the time spent inside the barrels, the beverage is subject to a controlled release of oxygen, thereby avoiding violent oxygenation which would result in generalized uncontrolled oxidation of the beverage itself.

The oxygen passes in fact in a slow and continuous manner through the pores in the wood and this favours the complexation of the unstable proteins contained in the alcoholic beverage with the consequent advantages.

In the case of wines, for example, the oxygen favours the development and stabilization of the colour, as well as the reduction in the astringency with consequent enriching of the bouquet and taste.

Refinement is a process which takes place, therefore, during a period which is necessarily very long so as to allow the release of the substances from the wood to the beverage and an adequate combination of the substances released with those already present in the beverage. In the case of red wine, for example, the best results are obtained after a period of between 12 and 24 months.

As already mentioned, refinement is preferably carried out inside barrels which have given characteristics and which undergo specific treatments in order to fix the aromatic and extractive substances which will be released to the beverage. One of the treatments most commonly used is "toasting" of the staves which will form the barrel.

The barrels used for refinement of the alcoholic beverages are usually made with oak wood, in particular sessile oak wood. In order to obtain a greater elasticity the wood of the trunk from plants which are aged between 120 and 240 years is used, boards being obtained from them and being seasoned in the open air for a period varying from 2 to 4 years.

One of the barrels most commonly used is the so-called "barrique bordelaise" (Bordeaux barrel), a barrel with a capacity of 225 litres with staves which have a thickness of between 18 and 25 mm.

Refinement may also be performed inside "tonneaux", i.e. barrels which have a variable capacity of between 500 and 700 litres and the staves of which have a thickness varying between 35 and 40 mm.

The construction of these barrels is performed by highly specialized labour and requires long processing times.

The use of wooden barrels, although favourably regarded, is not without defects.

Firstly, the alcoholic beverages must remain for a long period of time inside the barrels. This results in a considerable delay in the sale of the finished product and the immobilization of a significant amount of capital.

Furthermore, with the passing of time, the wood of the barrels loses its capacity to enrich the beverage with which it comes into contact, since it has already released its aromas. Also, with the passing of time, the pores in the wood become obstructed and no longer allow correct micro-oxygenation.

This means that the barrels must be periodically replaced. For example, in the case of red wines, the barrels must be replaced on average after about three refinement cycles.

The replacement of the barrels involves obvious management costs which are increased by the fact that the barrels per se are costly, since, as mentioned above, they are made by specialized labour using high-quality wood which may be obtained by felling very old trees, with the risk of deforestation of the areas from where this wood is obtained.

Moreover, the transportation and installation of wooden barrels in the cellars is not easy owing to the dimensions of said barrels. These dimensions will obviously have an impact also on the transportation costs and on the storage costs.

Recently, the use of the barrels has been combined with the use of chips or wooden staves.

Basically, porous bags containing chips or wooden staves which have specific characteristics are immersed in the steel tanks where, for example, the must ferments in wine or where the finished wine is refined.

During the contact between the alcoholic beverage and the chips or the wooden staves, tannins and aromas are released into the beverage in a manner apparently similar to that of a refinement process carried in wooden casks.

In any case, the use also of chips or staves, although it is less costly compared to the use of barrels, involves immobilization of the alcoholic beverage for a long period of time, with the consequences which have already been mentioned above.

The object of the present invention is therefore to overcome at least partially the drawbacks mentioned above with reference to the prior art.

In particular, a task of the present invention is to provide a device for the refinement of alcoholic beverages which allows the refinement of these beverages to be performed in a very short time and at a lower cost, without affecting the quality of the finished product.

Also, a task of the present invention is to provide a device for refinement of alcoholic beverages which is able to achieve a reduction in the amount of high-quality wood used and does not involve the use of specialized labour for the construction thereof.

Furthermore, a task of the present invention is to provide a device for refinement of alcoholic beverages which can be easily managed and may be easily transported and installed.

The aforementioned object and tasks are achieved by a device for refinement of alcoholic beverages in accordance with that claimed in Claim 1 and by a method for using such a device in accordance with that claimed in Claim 17.

In order to illustrate more clearly the present invention and its advantages compared to the prior art, some examples of embodiments of the invention will be described below with the aid of the attached drawings. In the drawings:
- Figure 1 shows a perspective view of a device according to the present invention;
- Figure 2 shows a side view of the device according to Figure 1;
- Figure 3 shows a front view of the device according to Figure 1;
- Figure 4 shows a view from above of the device according to Figure 1;
- Figure 5 shows in schematic form a cross-sectional view along the plane indicated by V-V in Figure 1;
- Figure 6 shows in schematic form a cross-sectional view along the plane indicated by VI-VI in Figure 1;
- Figure 7 shows a schematic view of a constructional element of the device according to Figure 1;
- Figure 8 shows a schematic view from above of the element according to Figure 7;
- Figure 9 shows in schematic form a view, on a larger scale, of the detail in Figure 8, indicated by the letter A;
- Figure 10 shows a perspective view of the device according to the invention in which the lid has been removed;
- Figure 11 shows a view, similar to that of Figure 10, in which the wood panels have been removed;
- Figures 12 shows in schematic form a perspective view, from below, of the lid of the device according to Figure 1;
- Figure 13 shows a view, on a larger scale, of the detail in Figure 5, indicated by the letter B;
- Figure 14 shows a view, on a larger scale, of the detail in Figure 5, indicated by the letter C;
- Figure 15 shows in schematic form the path followed by the alcoholic beverage inside the device according to the invention and the plant in which this device is inserted;
- Figure 16 shows a view, on a larger scale, of the detail in Figure 15, indicated by the letter D. A device for refinement of alcoholic beverages provided in accordance with the principles of the present invention is denoted generally by the reference number 1. The device 1 is designed to perform the refinement of alcoholic beverages, including for example those in the group of wines, liqueurs, distilled beverages, beers.

The device 1 is intended to receive the alcoholic beverage removed from a first tank, not shown in the attached figures, for transfer to a storage tank, also not shown in the attached figures.

In the description of the device 1 and its components which is provided below, the term "top" will be used to identify the part of the device or its single components which are relatively more distant from the surface supporting the device (for example the ground or a base), while the term "bottom" will refer to the part of the device or its single components which are relatively closer to the support surface.

The longitudinal axis of the device will be understood as meaning the axis which extends in the lengthwise direction of the device and which, when the device is being used, is roughly parallel to the support surface.

With reference to the attached figures, the device 1 comprises a container 10 having an inlet 12 and an outlet 14. The inlet 12 and the outlet 14 are preferably separate from each other. The container 10 defines a chamber 16 inside which a plurality of wooden elements 18 are arranged, these being spaced from each other and arranged perpendicularly with respect to a longitudinal axis X of the container 10.

In accordance with the invention, adjacent wooden elements 18 of said plurality are placed in contact in an alternating manner against a top horizontal surface 20 and a bottom horizontal surface 22 of the container 10 so as to be staggered heightwise and define with the bottom surface 22 and the opposite top surface 20 a through-opening 24a, 24b for allowing the flow of the alcoholic beverage which is to undergo refinement.

The reference number 24a is used to identify the top through-openings, i.e. the openings defined between the top horizontal surface 20 of the container 10 and the top edge of the wooden element 18 making contact against the bottom horizontal surface 22 of the container 10.

The reference number 24b is used to identify the bottom through-openings, i.e. the openings defined between the bottom horizontal surface 22 of the container 10 and the bottom edge of the wooden element 18 making contact against the top horizontal surface 20 of the container 10.

As will be clearly described below, the device 1 allows the refinement of the alcoholic beverage introduced inside it to be performed by means of contact between the wooden elements 18 and the beverage, performing in fact the same function as that of wooden barrels, but in a shorter time and more efficiently.

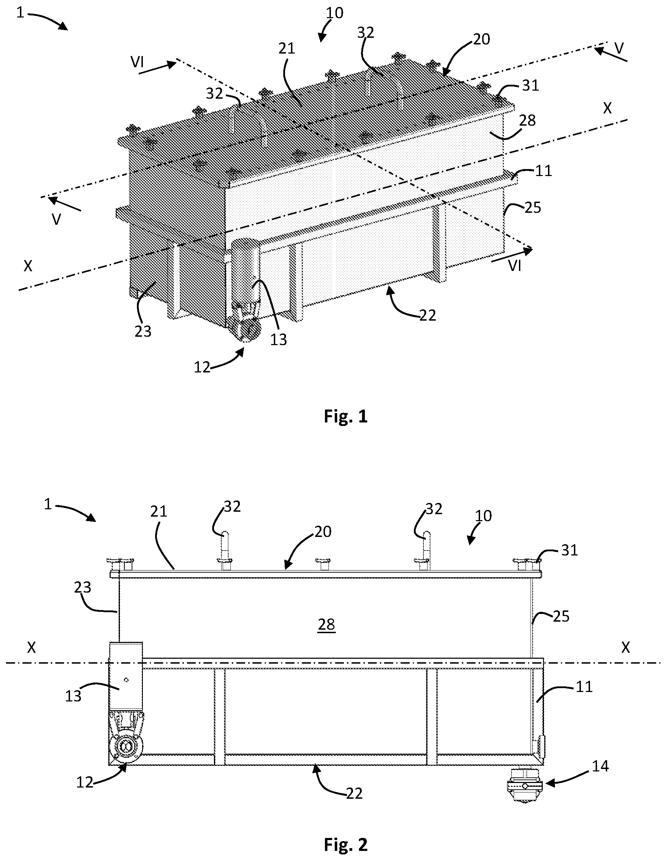

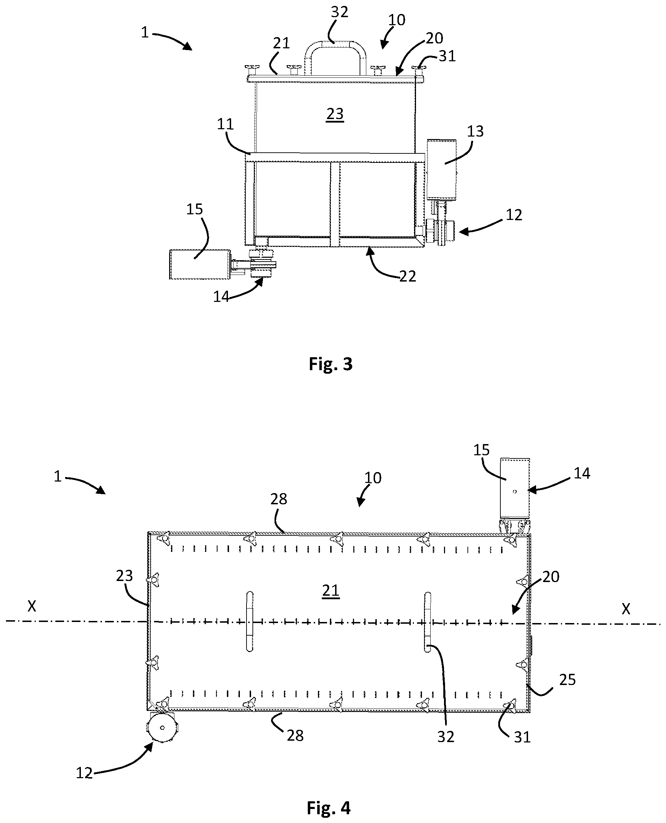

With reference firstly to Figures 1-4, the container 10 preferably has a closed box-like shape. Advantageously, the container 10 may be made of metallic material, preferably steel. The container 10 is preferably provided with an external reinforcing element 11 which is designed to oppose the thrusts exerted by the alcoholic beverage which is introduced inside it.

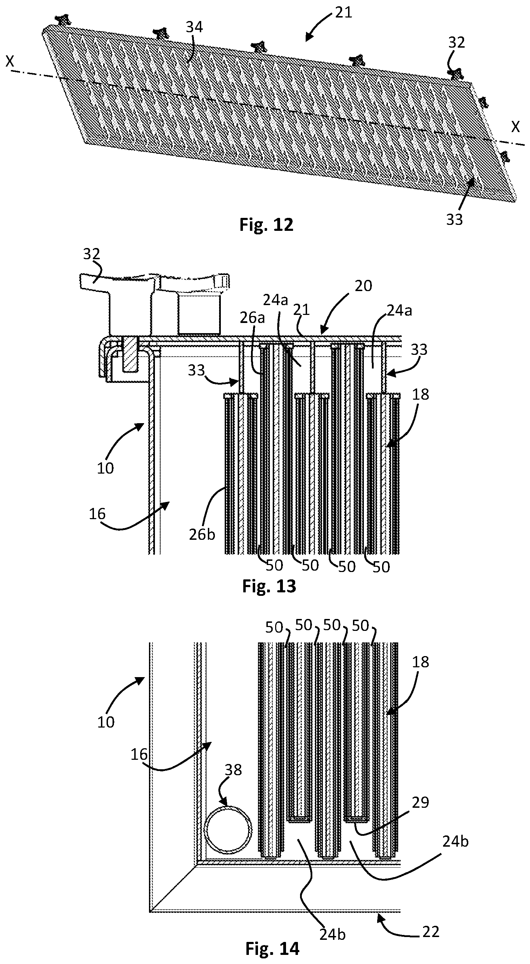

The container 10 is also preferably provided with a lid 21 - shown in detail in Fig. 12 - which is removably fixed along the top surface 20. Preferably, the lid 21 is sealingly fixed to the container 10, so as to prevent the beverage introduced into the device from coming into contact with the air and therefore with the atmospheric oxygen and being exposed to undesirable oxidation effects.

Advantageously, the lid 21 is fixed to the container 10 by means of special screws and nuts arranged along the perimeter of the lid 21. Preferably the screws are provided with gripping knobs 31.

The lid 21 may also be provided with gripping handles 32 designed to facilitate gripping and handling thereof.

As shown in Figures 12 and 13, a plurality of partitions 33 may project from the bottom surface of the lid 21. Said partitions 33 are advantageously arranged perpendicularly with respect to the longitudinal axis X. Preferably, they are equidistant from each other.

As will become clear from the description below, these partitions 33 are intended to be positioned at the top through-openings 24a defined by the wooden elements 18 placed in contact against the bottom surface 22 of the container 10.

In particular, the partitions 33 are intended to rest against the top edge of these wooden elements, so as to ensure that the latter are correctly positioned inside the chamber 16 of the container 10, in particular correctly spaced from the top surface 20.

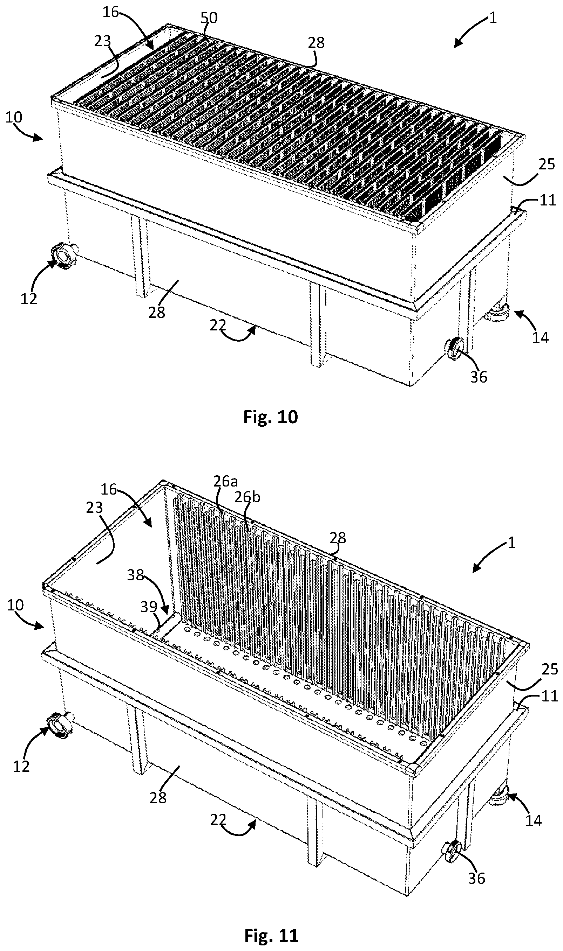

Advantageously, the partitions 33 are provided with through-slits 34. Said slits 34 are suitably shaped so as to allow the alcoholic beverage to pass through, reducing its swirling movement. The container 10 may be provided with a probe (not shown in the attached figures), designed to signal that filling of the chamber 16 has been completed, and with a bleeder valve 36 (see Figures 11 and 12).

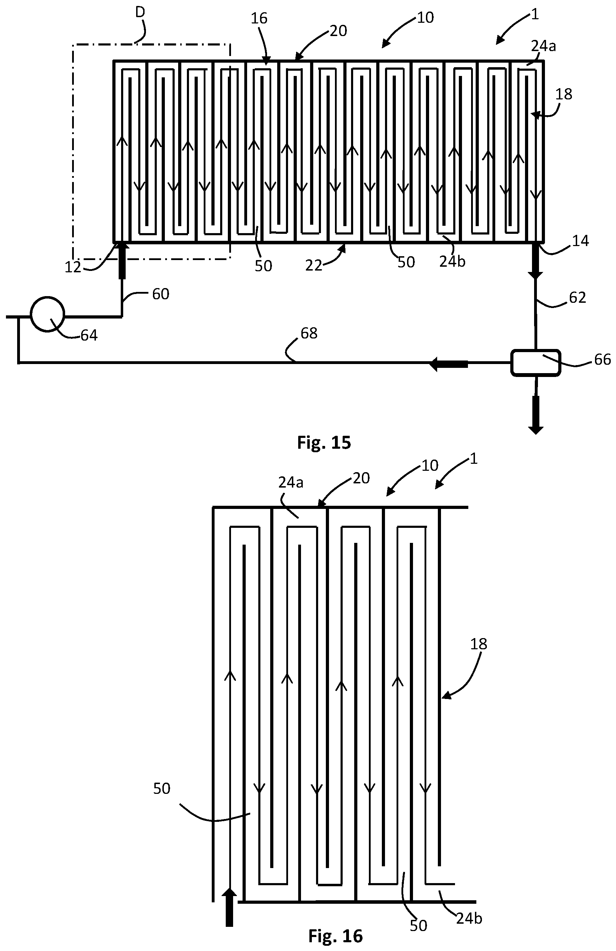

As mentioned, the container is provided with an inlet 12, intended to be connected to a first duct 60, an outlet 14 intended to be connected to a second duct 62 (see Figure 15). The first duct 60 is connected directly or indirectly to the delivery pipe of a pump 64 (see Figure 16) which ensures that the alcoholic beverage is introduced inside the device 1 under forced flow conditions.

Preferably, the inlet 12 and the outlet 14 are arranged in the vicinity of the bottom surface 22 of the container. Advantageously, the inlet 12 is positioned close to a front end wall 23 of the container 10 and the outlet 14 is positioned close to a rear end wall 25, opposite to the front end wall 23, of the container 10.

Preferably, the inlet 12 lies in a plane parallel to the bottom surface of the container, while the outlet 14 lies in a plane perpendicular to the bottom surface of the container.

As shown in Figures 1-4, a regulating valve 13, 15, preferably an electric valve, may be arranged at the inlet 12 and the outlet 14. These valves, which can be operated remotely, allow the regulation of the inflow and outflow of the beverage into/from the device 1.

As shown schematically in Figures 11 and 14, the inlet 12 is preferably in fluid communication with a distribution tube 38 provided on the bottom surface 22. This tube 38 extends substantially over the entire width of the container 10 and is provided with a plurality of through-holes 39.

The function of the distribution tube 38 is to ensure that the alcoholic beverage, once it has been introduced into the container 10 via the inlet 12, is able to be uniformly distributed over the entire width of the container 10 such that the wooden element 18 close to the inlet 12 and the following elements are uniformly wetted.

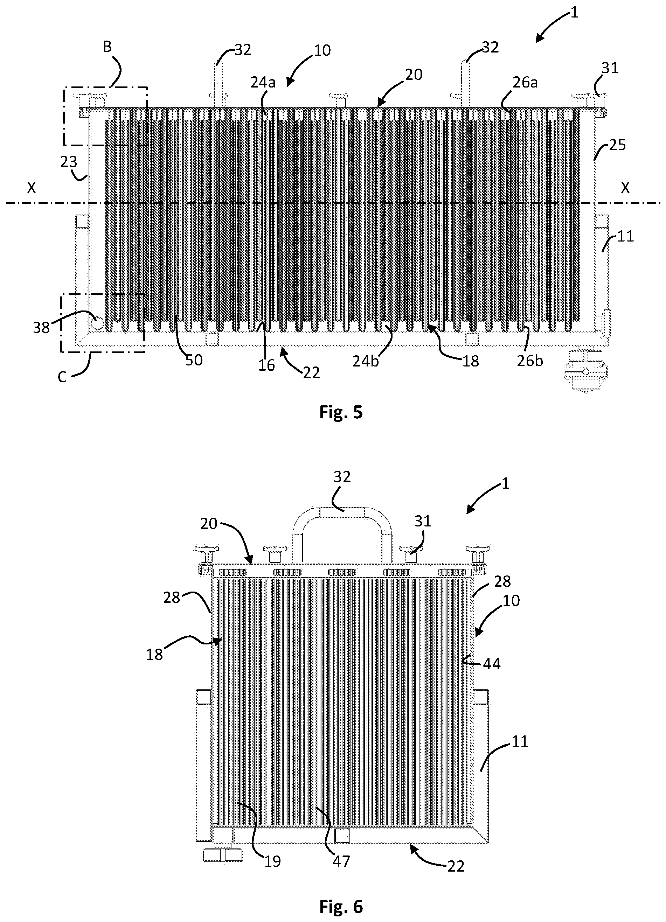

With reference to Figures 5, 13 and 14, as already mentioned, the wooden elements 18 are arranged inside the chamber 16 so as to be staggered heightwise.

Advantageously, the elements 18 are arranged inside the chamber 16 equidistant from each other along the longitudinal axis X.

Preferably, each wooden element 18 consists of a wooden panel. Advantageously, this panel may be made with oak wood, even more preferably sessile oak wood. Alternatively, the panels 18 may be made with different types of wood, for example chestnut, depending on the alcoholic beverage with which they come into contact and the type of refinement which must be carried out on it.

Advantageously, the panels 18 may be subjected to the same treatments which are usually carried out on the staves of wooden barrels, such as seasoning, toasting, carbonization, etc.

The number of wooden elements arranged inside the infuser varies depending on the dimensions of the infuser.

Preferably, an infuser having a length of 100 cm and width and height of 50 cm will be provided with about 60 rectangular panels having a width of 42 cm and height of 40 cm, such that the overall exchange surface area between panels and alcoholic beverage is advantageously equal to about 20 m².

In fact, as will be clarified below, the staggered arrangement of the panels ensures that the alcoholic beverage comes into contact with both faces of each panel, therefore obtaining a high exchange surface area even though the infuser has small external dimensions.

By way of comparison, a Bordeaux barrique with a diameter of 70 cm and height of 95 cm, with a capacity of 225 litres, has an exchange surface area of 2.85 m².

Each panel 18 may be flat. Alternatively, one or both faces of the panel 18 may be corrugated to increase the contact area between panel and alcoholic beverage.

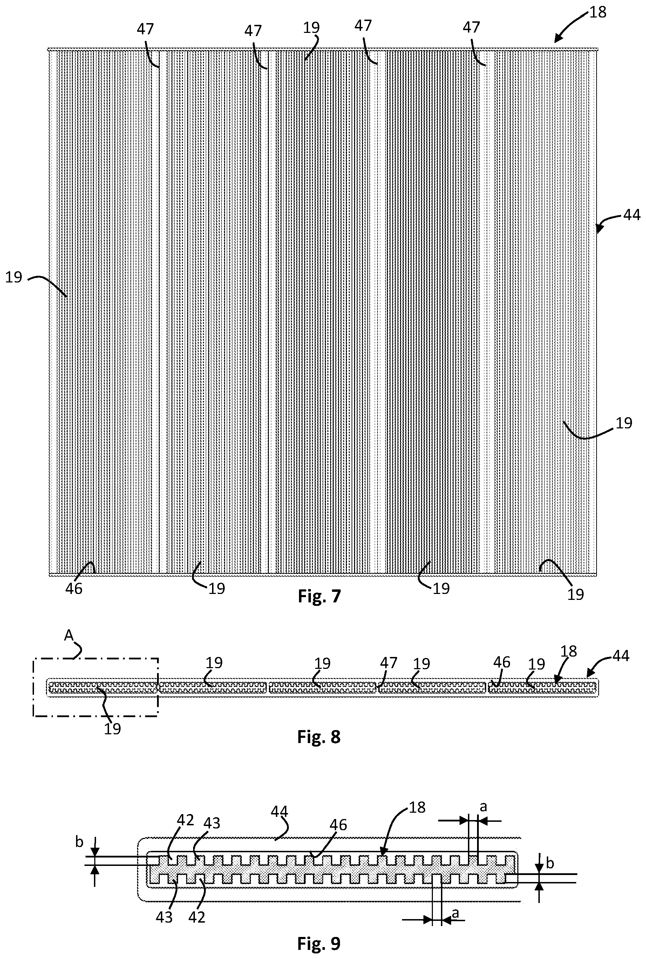

Preferably, the panel 18 may comprise grooves 42 which extend parallel to each other along one or both opposite faces of the panel (see for example Figures 8 and 9).

Advantageously these grooves 42 are arranged staggered between the opposite faces of the panel, so that for a groove 42 on one side there is a corresponding relief 43 on the other side.

This arrangement increases further the contact area between panel and alcoholic beverage.

The panels will be arranged inside the chamber 16 of the container 10 in such a way that the grooves 42 are perpendicular to the longitudinal axis X of the container 10.

The panels 18 have a width substantially equal to the width of the chamber 16 (see Figure 6) and a height smaller than the height of the chamber 16 (see Figures 13 and 14). The height of the panels 18 is substantially equal to the height of the chamber 16, less the height of the through-openings 24a, 24b (see Figure 5).

In particular, the dimensions of the panels 18, taking into account the normal working dimensional tolerances, are defined so that the alcoholic beverage introduced into the device cannot flow along the sides of the wooden elements.

Preferably, the thickness of the panels, whether they be flat or corrugated, is chosen within the range of between 4 mm and 5 mm, even more preferably within the range of between 4 mm and 4.5 mm.

In the case where the panels 18 are provided with grooves, the grooves 42 and the reliefs 43 have preferably a constant width "a" of 2 - 2.5 mm. Moreover, the grooves have a constant depth "b", also equal to 2 - 2.5 mm.

Advantageously, the panels 18 are formed by a single piece of wood.

Each panel 18 may be enclosed perimetrally by a surrounding containment frame 44. The top edge of the containment frame 44 is shaped so as to allow the sliding insertion of the panel inside the frame.

Alternatively, as shown for example in Figures 7 and 8, each panel 18 may consist of a plurality of separate staves 19, for example five in number, which are kept adjacent to each other by means of the frame 44.

In one embodiment, the frame 44 is provided with special seats 46 which are delimited by vertical supports 47 and inside which the staves 19 may be slidably inserted.

The frame 44, in addition to giving the panel and/or the staves rigidity, if the panel is formed by a plurality of staves ensures that there is no seepage between two adjacent staves.

Advantageously, the possibility of constructing the panels by arranging several staves 19 next to each other means that pieces of wood with smaller initial dimensions may be used, thereby reducing the wastage of high-quality wood.

Preferably, the wooden elements 18, be they in the form of a single panel or assembled staves, are fixed along the side walls 28 of the container 10. The side walls 28 are defined as being the walls which extend parallel to the longitudinal axis X of the container and which connect the top horizontal surface 20 to the bottom horizontal surface 22.

Preferably, the wooden elements 18 are fixed on lateral supports 26a, 26b which are provided along the side walls 28. These supports have the function of keeping the wooden elements 18 equidistant from each other and of supporting these elements in contact with or spaced from the bottom horizontal surface 22.

The lateral supports 26a, 26b preferably consist of linear guides inside which the wooden elements are slidably inserted.

Preferably, these guides have a thickness which is equal to the thickness of the elements 18. If the elements 18 are provided with a frame 44, the guides will have a thickness which is equal to the lateral thickness of said frame.

The supports 26a intended to keep the elements 18 spaced from the bottom surface 22 are provided at their bottom end with a support foot 29 on which the corresponding element will rest.

The distance between said foot 29 and the bottom surface 22 corresponds to the height of the associated bottom through-opening 24b (see for example Figure 14).

Advantageously, as can be clearly seen in Figures 5, 13, 14, 15 and 16, the wooden elements 18 are arranged inside the chamber so that an interspace 50 is defined between two adjacent elements.

This interspace 50 forms the channel inside which the alcoholic beverage flows once it has been introduced inside the device. The passage of the alcoholic beverage between two adjacent interspaces occurs via the through-openings 24a, 24b.

Preferably, the interspace 50 has a thickness of about 10-15 mm.

In accordance with the invention, therefore, the alcoholic beverage, once it has been introduced inside the device, will be forced to follow a predetermined "serpentine" path which ensures that both faces of each wooden element come into contact with the alcoholic beverage (see Figures 15 and 16).

The flow of the alcoholic beverage inside two adjacent interspaces occurs in a counterflow manner, namely the flow of the beverage inside a first interspace has a direction which is opposite to the flow of the beverage inside the interspaces adjacent to said first interspace (see for example Figures 15 and 16).

A method for refinement of an alcoholic beverage by using the device 1 according to the present invention is described below. Reference will be made to the embodiment in which each wooden element consists of a panel 18. However, the comments which follow are also applicable to the other embodiments of the device described in the present application.

The inlet 12 of the device 1 is connected to a supply duct 60 for the alcoholic beverage, said duct 60 being connected, directly or indirectly, to the delivery pipe of a pump 64.

The outlet 14 of the device, in turn, is connected to a discharge duct 62 which, by means of a diverter valve 66 supplies a storage tank (not shown in the figures) and/or a connection duct 68 connected to the supply duct of the device 1.

Upon start-up of the pump 64 connected to the device, the alcoholic beverage is introduced inside the device under forced flow conditions.

The method according to the present invention is characterized in that the alcoholic beverage flows inside the device 1 so as to follow a forced path inside the interspaces defined between the adjacent wooden elements 18 of the device, passing from one interspace to another adjacent interspace via the through-openings 24a, 24b so as to come into contact with both faces of each element before being introduced, via the outlet 14, into the discharge duct 62.

In particular, the alcoholic beverage flows under forced conditions inside the interspaces 50 defined between two adjacent wooden panels 18, passing from one interspace to another via the top through-openings 24a and the bottom through-openings 24b.

The method advantageously may comprise a step of analysis and characterization of the alcoholic beverage output from the device. In particular, the alcoholic beverage will be directed by means of the deviator valve 66 towards the storage tank if it has reached the desired degree of refinement and/or towards the connection duct 68 if it must be introduced again into the device.

Advantageously, following the analysis and characterization step, the alcoholic beverage output from the device may be partly directed towards the storage tank and partly directed towards the connection duct 68.

The method may also involve a step of static refinement of the alcoholic beverage, in which the alcoholic beverage, after being introduced under forced conditions inside the device 1 and before being introduced into the discharge duct 62, is kept inside the device 1, for a given period of time, keeping the outlet 14 closed.

Preferably this step takes place upon start-up of the feed pump 64.

In this case, the valve 15 arranged at the outlet, is kept closed, until the chamber 16 is completely filled. Following signalling of the completed filling of the chamber 16, so that the alcoholic beverage has completely filled the interspaces 50 formed between the adjacent wooden panels, the valve 15 is opened.

Advantageously, however, the valve 15 may be closed during normal operation of the device, so as to allow the contact time between the wooden elements and the alcoholic beverage to be prolonged further in the event of particular needs.

The prolonged contact between beverage and wooden panels is such that the latter are able to release quickly to the beverage the substances contained in them, such as tannins, so as to enrich the beverage from the point of view of its aroma.

Advantageously, the device 1 may be also inserted inside a plant where it is possible to blow in a first quantity of oxygen into the alcoholic beverage undergoing refinement, before it passes into the infuser.

This oxygenation allows the substances released from the panels to be fixed inside the alcoholic beverage, favouring the refinement of said beverage.

The panels 18 with the passing of time may lose their enriching capacity.

In this case, it is sufficient to close the inlet valve 13, empty the chamber 16 and remove the lid 21.

The configuration of the frame 40 allows the staves 19 to be extracted from their seats and replaced quickly and easily with new staves.

Advantageously, the same device may be used with staves made from different types of wood, so as to vary the degree of refinement which is imparted to the alcoholic beverage.

At this point it is clear how the predefined objects have been achieved.

With the device according to the invention it is possible to perform refinement of the alcoholic beverage quickly and at a lower cost, compared to the known wooden barrels.

The beverage, flowing in contact with the wooden panels, is able to absorb more quickly the substances released by the wood itself, without having to remain inside a barrel for a long period of time.

It is clear therefore how this allows a drastic reduction in the costs to be obtained, without repercussions on the quality of the finished product.

Moreover, with the device according to the invention, the amount of high-quality wood used may be reduced.

The panels, in fact, although they are made with the same wood generally used to make barrels and are preferably subjected to the same treatments, for example toasting, have smaller thicknesses, i.e. 4-5 mm, compared to the thicknesses of the barrel staves, which generally range between 18 and 25 mm.

The manufacture of the panels moreover is facilitated and does not require the use of specialized labour.

Moreover, the panels may be easily stored and transported.

## Claims

1. Device (1) for refinement of an alcoholic beverage comprising a container (10) having an inlet (12) and an outlet (14) for the alcoholic beverage undergoing refinement; said container (10) defining a chamber (16) inside which a plurality of wooden elements (18) are arranged, these being spaced from each other and arranged perpendicularly with respect to a longitudinal axis (X) of said container (10) so as that an interspace (50) is defined between two adjacent wooden elements (18); said wooden elements (18) having a width equal to the width of the chamber (16) and a height smaller than the height of the chamber (16);
the device being **characterized in that** adjacent wooden elements (18) of said plurality are placed in contact in an alternating manner against a top horizontal surface (20) and a bottom horizontal surface (22) of said container (10) so as to be staggered heightwise and define with the bottom surface (22) and the opposite top surface (20) a through-opening (24a, 24b) for allowing the flow of the alcoholic beverage undergoing refinement inside the interspaces (50) defined between two adjacent wooden elements (18); the passage of the alcoholic beverage undergoing refinement between two adjacent interspaces occurring via the through-openings (24a, 24b).

2. Device (1) according to Claim 1, **characterized in that** said wooden elements (18) of said plurality are arranged inside the chamber (16) equidistant from each other along the longitudinal axis (X).

3. Device (1) according to Claim 1, **characterized in that** each wooden element (18) of said plurality consists of a wooden panel, preferably an oak wood panel, even more preferably, sessile oak wood panel.

4. Device (1) according to Claim 3, **characterized in that** each wooden panel (18) is a flat panel or **in that** one or both faces of the wooden panel (18) are corrugated.

5. Device (1) according to Clam 3, **characterized in that** each wooden panel (18) comprises grooves (42) which extend parallel to each other along one or both the opposite faces of the wooden panel (18), these grooves (42) being arranged staggered between the opposite faces of the wooden panel (18) such that for a groove (42) on one side there is a corresponding relief (43) on the other side.

6. Device (1) according to Claim 5, **characterized in that** the wooden panels (18) are arranged inside the chamber (16) so that these grooves (42) are perpendicular to the longitudinal axis (X) of the container (10).

7. Device (1) according to Claim 1, **characterized in that** each wooden element (18) of said plurality consists of a panel formed by a single piece of wood; each panel (18) being enclosed perimetrally by a containment frame (44).

8. Device (1) according to Claim 1, **characterized in that** each wooden element (18) of said plurality is formed by a panel consisting of a plurality of staves (19); said staves (19) being kept adjacent to each other by means of a containment frame (44).

9. Device (1) according to Claim 7 or Claim 8, **characterized in that** said panel (18) or said staves (19) are slidably inserted inside the containment frame (44).

10. Device (1) according to Claim 1, **characterized in that** the wooden elements (18) of said plurality are fixed to lateral supports (26a, 26b) arranged along side walls (28) of the container (10).

11. Device (1) according to Claim 10, **characterized in that** said lateral supports (26a, 26b) consist of linear guides in which the wooden elements (18) of said plurality are slidably inserted.

12. Device (1) according to Claim 10, **characterized in that** the lateral supports (26a) intended to keep the wooden elements (18) of said plurality (22) spaced from the bottom surface are provided at their bottom end with a support foot (29) for the corresponding wooden element (18).

13. Device (1) according to Claim 1, **characterized in that** the container (10) is provided with a lid (21) removably fixed along the top surface (20); said lid being sealingly fixed to the container (10).

14. Device (1) according to Claim 13, **characterized in that** a plurality of partitions (33) project from a bottom surface of the lid (21); the partitions (33) of said plurality being arranged perpendicularly with respect to the longitudinal axis (X), at the top through-openings (24a) defined by the wooden elements (18) of said plurality placed in contact against the bottom surface (22) of the container (10).

15. Device (1) according to Claim 14, **characterized in that** the partitions (33) of said plurality are provided with through-slits (34).

16. Device (1) according to Claim 1, **characterized in that** the container (10) has a closed box-like shape.

17. Method for the refinement of an alcoholic beverage by using a device (1) according to any one of the preceding claims, the method comprising the steps of:
- connecting the inlet (12) of the device (1) to a supply duct (60) for the alcoholic beverage which is to undergo refinement; said duct (60) being connected, directly or indirectly, to the delivery pipe of a pump (64)'
- connecting the outlet (14) of the device (1) to a discharge duct (62) which by means of a diverter valve (66) supplies a storage tank and/or a connection duct (68) connected to the supply duct (60) of the device (1);
- starting the pump (64) connected to the device (1) in order to introduce the alcoholic beverage inside the device (1) under forced flow conditions;
said method being **characterized in that**
the alcoholic beverage undergoing refinement flows inside the device (1) so as to follow a forced path inside the interspaces (50) defined between the adjacent wooden elements (18), passing from one interspace to another adjacent interspace via the through-openings (24a, 24b) so as to come into contact with both faces of each wooden element (18) before being introduced, via the inlet (14), into the discharge duct (62).

18. Method according to the preceding claim, **characterized in that** said wooden elements (18) are wooden panels and **in that** the alcoholic beverage flows under forced flow conditions inside the interspaces (50).

19. Method according to Claim 17, **characterized in that** it comprises a step of analysis and characterization of the alcoholic beverage output from the device (1); the alcoholic beverage being directed by means of the diverter valve (66) towards the storage tank if it has reached the desired degree of refinement and/or towards the connection duct (68) if it needs to be introduced again into the device (1).

20. Method according to Claim 17, **characterized in that** the alcoholic beverage, after it has been introduced into the device (1) and before being introduced into the discharge duct (62), is kept inside the device (1) for a given period of time keeping the outlet (14) closed.

## Patentansprüche

1. Vorrichtung (1) zur Veredelung eines alkoholischen Getränks, umfassend einen Behälter (10) mit einem Einlass (12) und einem Auslass (14) für das alkoholische Getränk, das einer Veredelung unterzogen wird; wobei der Behälter (10) eine Kammer (16) definiert, in deren Inneren eine Vielzahl von Holzelementen (18) angeordnet sind, wobei diese voneinander beabstandet und senkrecht zu einer Längsachse (X) des Behälters (10) angeordnet sind, damit ein Zwischenraum (50) zwischen zwei benachbarten Holzelementen (18) definiert ist; wobei die Holzelemente (18) eine Breite gleich der Breite der Kammer (16) und eine Höhe kleiner als die Höhe der Kammer (16) aufweisen; wobei die Vorrichtung **dadurch gekennzeichnet ist, dass** benachbarte Holzelemente (18) der Vielzahl abwechselnd an einer horizontalen Oberseite (20) und einer horizontalen Unterseite (22) des Behälters (10) in Kontakt gebracht sind, um so in Höhenrichtung versetzt zu sein, und mit der Unterseite (22) und der gegenüberliegenden Oberseite (20) eine Durchgangsöffnung (24a, 24b) zum Ermöglichen des Fließens des alkoholischen Getränks, das im Inneren der zwischen zwei benachbarten Holzelementen (18) definierten Zwischenräume (50) einer Veredelung unterzogen wird, definieren; wobei der Durchgang des alkoholischen Getränks, das einer Veredelung unterzogen wird, zwischen zwei benachbarten Zwischenräumen über die Durchgangsöffnungen (24a, 24b) erfolgt.

2. Vorrichtung (1) nach Anspruch 1, **dadurch gekennzeichnet, dass** die Holzelemente (18) der Vielzahl im Inneren der Kammer (16) in gleichem Abstand voneinander entlang der Längsachse (X) angeordnet sind.

3. Vorrichtung (1) nach Anspruch 1, **dadurch gekennzeichnet, dass** jedes Holzelement (18) der Vielzahl aus einer Holzplatte besteht, vorzugsweise einer Eichenholzplatte, noch bevorzugter einer Traubeneichenholzplatte.

4. Vorrichtung (1) nach Anspruch 3, **dadurch gekennzeichnet, dass** jede Holzplatte (18) eine flache Platte ist oder dass eine oder beide Seiten der Holzplatte (18) geriffelt sind.

5. Vorrichtung (1) nach Anspruch 3, **dadurch gekennzeichnet, dass** jede Holzplatte (18) Rillen (42) umfasst, die sich parallel zueinander entlang einer oder beider gegenüberliegender Seiten der Holzplatte (18) erstrecken, wobei diese Rillen (42) versetzt zwischen den gegenüberliegenden Seiten der Holzplatte (18) angeordnet sind, sodass für eine Rille (42) auf einer Seite eine entsprechende Erhebung (43) auf der anderen Seite vorhanden ist.

6. Vorrichtung (1) nach Anspruch 5, **dadurch gekennzeichnet, dass** die Holzplatten (18) im Inneren der Kammer (16) so angeordnet sind, dass diese Rillen (42) senkrecht zur Längsachse (X) des Behälters (10) stehen.

7. Vorrichtung (1) nach Anspruch 1, **dadurch gekennzeichnet, dass** jedes Holzelement (18) der Vielzahl aus einer Platte besteht, die aus einem einzigen Stück Holz gebildet ist, wobei jede Platte (18) an ihrem Umfang von einem Begrenzungsrahmen (44) umschlossen ist.

8. Vorrichtung (1) nach Anspruch 1, **dadurch gekennzeichnet, dass** jedes Holzelement (18) der Vielzahl aus einer Platte gebildet ist, die aus einer Vielzahl von Dauben (19) besteht, wobei die Dauben (19) mit Hilfe eines Begrenzungsrahmens (44) nebeneinander gehalten werden.

9. Vorrichtung (1) nach Anspruch 7 oder Anspruch 8, **dadurch gekennzeichnet, dass** die Platte (18) oder die Dauben (19) verschiebbar im Inneren des Begrenzungsrahmens (44) eingesetzt sind.

10. Vorrichtung (1) nach Anspruch 1, **dadurch gekennzeichnet, dass** die Holzelemente (18) der Vielzahl an seitlichen Stützen (26a, 26b) befestigt sind, die entlang der Seitenwände (28) des Behälters (10) angeordnet sind.

11. Vorrichtung (1) nach Anspruch 10, **dadurch gekennzeichnet, dass** die seitlichen Stützen (26a, 26b) aus linearen Führungen bestehen, in die die Holzelemente (18) der Vielzahl verschiebbar eingesetzt sind.

12. Vorrichtung (1) nach Anspruch 10, **dadurch gekennzeichnet, dass** die seitlichen Stützen (26a), die dazu bestimmt sind, die Holzelemente (18) der Vielzahl (22) von der Unterseite beabstandet zu halten, an ihrem unteren Ende mit einem Stützfuß (29) für das entsprechende Holzelement (18) versehen sind.

13. Vorrichtung (1) nach Anspruch 1, **dadurch gekennzeichnet, dass** der Behälter (10) mit einem Deckel (21) versehen ist, der entlang der Oberseite (20) abnehmbar befestigt ist, wobei der Deckel am Behälter (10) abdichtend befestigt ist.

14. Vorrichtung (1) nach Anspruch 13, **dadurch gekennzeichnet, dass** eine Vielzahl von Trennwänden (33) von einer Unterseite des Deckels (21) vorstehen; wobei die Trennwände (33) der Vielzahl senkrecht zur Längsachse (X) an den oberen Durchgangsöffnungen (24a) angeordnet sind, die durch die Holzelemente (18) der Vielzahl definiert sind, die mit der Unterseite (22) des Behälters (10) in Kontakt gebracht sind.

15. Vorrichtung (1) nach Anspruch 14, **dadurch gekennzeichnet, dass** die Trennwände (33) der Vielzahl mit Durchgangsschlitzen (34) versehen sind.

16. Vorrichtung (1) nach Anspruch 1, **dadurch gekennzeichnet, dass** der Behälter (10) eine geschlossene kastenartige Form aufweist.

17. Verfahren zur Veredelung eines alkoholischen Getränks unter Verwendung einer Vorrichtung (1) nach irgendeinem der vorhergehenden Ansprüche, wobei das Verfahren die folgenden Schritte umfasst:
- Verbinden des Einlasses (12) der Vorrichtung (1) mit einer Zuführleitung (60) für das alkoholische Getränk, das einer Veredelung unterzogen werden soll, wobei die Leitung (60) direkt oder indirekt mit dem Förderrohr einer Pumpe (64)' verbunden ist;
- Verbinden des Auslasses (14) der Vorrichtung (1) mit einer Abführleitung (62), die mit Hilfe eines Umlenkventils (66) einen Lagertank und/oder eine Verbindungsleitung (68) versorgt, die mit der Zuführleitung (60) der Vorrichtung (1) verbunden ist;
- Starten der mit der Vorrichtung (1) verbundenen Pumpe (64), um das alkoholische Getränk unter Zwangsdurchflussbedingungen in das Innere der Vorrichtung (1) einzuführen;
wobei das Verfahren **dadurch gekennzeichnet ist, dass**
das alkoholische Getränk, das einer Veredelung unterzogen wird, im Inneren der Vorrichtung (1) fließt, um so einem erzwungenen Weg innerhalb der Zwischenräume (50) zu folgen, die zwischen den benachbarten Holzelementen (18) definiert sind, wobei es über die Durchgangsöffnungen (24a, 24b) von einem Zwischenraum zu einem benachbarten Zwischenraum gelangt, um so mit beiden Seiten jedes Holzelements (18) in Kontakt zu kommen, bevor es über den Einlass (14) in die Abführleitung (62) eingeführt wird.

18. Verfahren nach dem vorhergehenden Anspruch, **dadurch gekennzeichnet, dass** die Holzelemente (18) Holzplatten sind, und dass das alkoholische Getränk unter Zwangsdurchflussbedingungen im Inneren der Zwischenräume (50) fließt.

19. Verfahren nach Anspruch 17, **dadurch gekennzeichnet, dass** es einen Schritt der Analyse und Charakterisierung des aus der Vorrichtung (1) ausgegebenen alkoholischen Getränks umfasst, wobei das alkoholische Getränk mit Hilfe des Umlenkventils (66) zum Lagertank, wenn es den gewünschten Veredelungsgrad erreicht hat, und/oder zur Verbindungsleitung (68), wenn es erneut in die Vorrichtung (1) eingeführt werden muss, geleitet wird.

20. Verfahren nach Anspruch 17, **dadurch gekennzeichnet, dass** das alkoholische Getränk, nachdem es in die Vorrichtung (1) eingeführt worden ist und bevor es in die Abführleitung (62) eingeführt wird, für einen bestimmten Zeitraum im Inneren der Vorrichtung (1) gehalten wird, wobei der Auslass (14) geschlossen gehalten bleibt.

## Revendications

1. Dispositif (1) de raffinage d'une boisson alcoolisée comprenant un récipient (10) ayant une entrée (12) et une sortie (14) pour la boisson alcoolisée en cours de raffinage ; ledit récipient (10) définissant une chambre (16) à l'intérieur de laquelle sont agencés une pluralité d'éléments en bois (18), ceux-ci étant espacés les uns des autres et agencés perpendiculairement par rapport à un axe longitudinal (X) dudit récipient (10) de sorte qu'un espace intermédiaire (50) soit défini entre deux éléments en bois adjacents (18) ; lesdits éléments en bois (18) ayant une largeur égale à la largeur de la chambre (16) et une hauteur inférieure à la hauteur de la chambre (16) ;
le dispositif étant **caractérisé en ce que** des éléments en bois adjacents (18) de ladite pluralité sont placés en contact de manière alternée contre une surface horizontale supérieure (20) et une surface horizontale inférieure (22) dudit récipient (10) de manière à être décalés en hauteur et à définir avec la surface inférieure (22) et la surface supérieure opposée (20) une ouverture traversante (24a, 24b) pour permettre l'écoulement de la boisson alcoolisée en cours d'affinage à l'intérieur des espaces intermédiaires (50) définis entre deux éléments en bois adjacents (18) ; le passage de la boisson alcoolisée en cours d'affinage entre deux espaces intermédiaires adjacents s'effectuant par le biais des ouvertures traversantes (24a, 24b).

2. Dispositif (1) selon la revendication 1, **caractérisé en ce que** lesdits éléments en bois (18) de ladite pluralité sont agencés à l'intérieur de la chambre (16) à égale distance les uns des autres selon l'axe longitudinal (X).

3. Dispositif (1) selon la revendication 1, **caractérisé en ce que** chaque élément en bois (18) de ladite pluralité est constitué d'un panneau en bois, de préférence un panneau en bois de chêne, de manière encore plus préférable, un panneau en bois de chêne sessile.

4. Dispositif (1) selon la revendication 3, **caractérisé en ce que** chaque panneau en bois (18) est un panneau plan ou **en ce qu'**une ou les deux faces du panneau en bois (18) sont ondulées.

5. Dispositif (1) selon la revendication 3, **caractérisé en ce que** chaque panneau en bois (18) comprend des rainures (42) qui se prolongent parallèlement les unes aux autres le long d'une ou des deux faces opposées du panneau en bois (18), ces rainures (42) étant agencées en quinconce entre les faces opposées du panneau en bois (18) de telle sorte qu'à une rainure (42) d'un côté correspond un relief (43) de l'autre côté.

6. Dispositif (1) selon la revendication 5, **caractérisé en ce que** les panneaux en bois (18) sont agencés à l'intérieur de la chambre (16) de telle sorte que ces rainures (42) soient perpendiculaires à l'axe longitudinal (X) du récipient (10).

7. Dispositif (1) selon la revendication 1, **caractérisé en ce que** chaque élément en bois (18) de ladite pluralité est constitué d'un panneau formé d'une seule pièce de bois ; chaque panneau (18) étant entouré périphériquement par un cadre de confinement (44).

8. Dispositif (1) selon la revendication 1, **caractérisé en ce que** chaque élément en bois (18) de ladite pluralité est formé par un panneau constitué d'une pluralité de douelles (19) ; lesdites douelles (19) étant maintenues adjacentes les unes aux autres au moyen d'un cadre de contention (44).

9. Dispositif (1) selon la revendication 7 ou la revendication 8, **caractérisé en ce que** ledit panneau (18) ou lesdites douelles (19) sont insérées de manière coulissante à l'intérieur du cadre de confinement (44).

10. Dispositif (1) selon la revendication 1, **caractérisé en ce que** les éléments en bois (18) de ladite pluralité sont fixés à des supports latéraux (26a, 26b) agencés le long des parois (28) du conteneur (10).

11. Dispositif (1) selon la revendication 10, **caractérisé en ce que** lesdits supports latéraux (26a, 26b) sont constitués de guides linéaires dans lesquels sont insérés de manière coulissante les éléments en bois (18) de ladite pluralité.

12. Dispositif (1) selon la revendication 10, **caractérisé en ce que** les supports latéraux (26a) destinés à maintenir les éléments en bois (18) de ladite pluralité (22) espacés de la surface inférieure sont munis à leur extrémité inférieure d'un pied d'appui (29) pour l'élément en bois (18) correspondant.

13. Dispositif (1) selon la revendication 1, **caractérisé en ce que** le récipient (10) est pourvu d'un couvercle (21) fixé de manière amovible le long de la surface supérieure (20) ; ledit couvercle étant fixé de manière étanche au récipient (10).

14. Dispositif (1) selon la revendication 13, **caractérisé en ce qu'**une pluralité de cloisons (33) font saillie à partir d'une surface inférieure du couvercle (21) ; les cloisons (33) de ladite pluralité étant agencées perpendiculairement par rapport à l'axe longitudinal (X), au sommet des ouvertures traversantes (24a) définies par les éléments en bois (18) de ladite pluralité placés en contact contre la surface inférieure (22) du récipient (10).

15. Dispositif (1) selon la revendication 14, **caractérisé en ce que** les cloisons (33) de ladite pluralité sont pourvues de fentes traversantes (34).

16. Dispositif (1) selon la revendication 1, **caractérisé en ce que** le récipient (10) a une forme de boîte fermée.

17. Procédé de raffinage d'une boisson alcoolisée au moyen d'un dispositif (1) selon l'une quelconque des revendications précédentes, le procédé comprenant les étapes :
- de liaison de l'entrée (12) du dispositif (1) à un conduit d'alimentation (60) de la boisson alcoolisée à affiner ; ledit conduit (60) étant relié, directement ou indirectement, au tuyau de refoulement d'une pompe (64).
- de liaison de la sortie (14) du dispositif (1) à un conduit d'évacuation (62) qui, au moyen d'une vanne de dérivation (66), alimente un réservoir de stockage et/ou un conduit de raccordement (68) relié au conduit d'alimentation (60) du dispositif (1) ;
- de démarrage de la pompe (64) reliée au dispositif (1) afin d'introduire la boisson alcoolisée à l'intérieur du dispositif (1) dans des conditions de flux forcé ;
ledit procédé étant **caractérisé en ce que**
la boisson alcoolisée en cours de raffinage s'écoule à l'intérieur du dispositif (1) de manière à suivre un trajet forcé à l'intérieur des espaces intermédiaires (50) définis entre les éléments en bois adjacents (18), en passant d'un espace intermédiaire à un autre espace intermédiaire adjacent par les ouvertures traversantes (24a, 24b) de manière à venir en contact avec les deux faces de chaque élément en bois (18) avant d'être introduite, par l'entrée (14), dans le conduit d'évacuation (62).

18. Procédé selon la revendication précédente, **caractérisé en ce que** lesdits éléments en bois (18) sont des panneaux en bois et **en ce que** la boisson alcoolisée s'écoule dans des conditions d'écoulement forcé à l'intérieur des interstices (50).

19. Procédé selon la revendication 17, **caractérisé en ce qu'**il comprend une étape d'analyse et de caractérisation de la boisson alcoolisée en sortie du dispositif (1) ; la boisson alcoolisée étant dirigée au moyen de la vanne de dérivation (66) vers le réservoir de stockage si elle a atteint le degré de raffinage souhaité et/ou vers le conduit de liaison (68) si elle doit être réintroduite dans le dispositif (1).

20. Procédé selon la revendication 17, **caractérisé en ce que** la boisson alcoolisée, après avoir été introduite dans le dispositif (1) et avant d'être introduite dans le conduit d'évacuation (62), est maintenue à l'intérieur du dispositif (1) pendant une durée déterminée en maintenant la sortie (14) fermée.
